# EUROPEAN PATENT APPLICATION

(11) **EP 4 803 350 A1**
(43) Date of publication of application: **09.09.2026**
(21) Application number: 24884106.6
(22) Date of filing: 09.08.2024
(51) Int. Cl.: B60L 53/16, H01R 13/639, H01R 31/06, H01R 13/629, H01R 13/66

(54) **ADAPTER DEVICE AND VEHICLE**

(30) Priority: 31.10.2023 CN 202322952654 U
(71) Applicant: BYD Company Limited, Shenzhen, Guangdong 518118 (CN)
(72) Inventor: XIA, Zhishuan, Shenzhen, Guangdong 518118 (CN); YUAN, Shaokui, Shenzhen, Guangdong 518118 (CN); CHAI, Xinning, Shenzhen, Guangdong 518118 (CN); LIANG, Enxi, Shenzhen, Guangdong 518118 (CN); LIU, Zhongyuan, Shenzhen, Guangdong 518118 (CN)
(74) Representative: Mathys & Squire
(86) International application number: PCT/CN2024/111117
(87) International publication number: WO 2025/092099

(57) **Abstract**

Disclosed is a vehicle including an adapter apparatus. The adapter apparatus is configured to implement power transmission between vehicles. The adapter apparatus includes an adapter body and a locking component. One end of the adapter body is a vehicle end, configured to connect to a first vehicle, the other end is a socket end, configured to connect to a power supply connector, and the power supply connector is configured to connect to a second vehicle. The locking component is disposed on the adapter body. When the power supply connector is connected to the socket end, the locking component is configured to implement locking between the socket end and the power supply connector.

## Description

### CROSS-REFERENCES TO RELATED APPLICATIONS

This application claims priority to Chinese Patent Application No. 202322952654.1, filed October 31, 2023 and entitled "ADAPTER APPARATUS AND VEHICLE", which is incorporated herein by reference in its entirety.

### TECHNICAL FIELD

This application relates to the field of electric vehicle charging, and specifically, to an adapter apparatus and a vehicle.

### BACKGROUND

A vehicle-to-vehicle (V2V for short) charging technology allows an electric vehicle to transfer power stored in a power battery pack to another electric vehicle. The electric vehicle implements V2V through an adapter apparatus. The adapter apparatus is inserted into a vehicle socket of a first vehicle, and a power supply connector connected to a second vehicle is connected to the adapter apparatus, so that the first vehicle supplies power to the second vehicle. However, in the related technologies, when a power supply connector is connected to an adapter apparatus, the connection between the power supply connector and the adapter apparatus is unreliable. After charging is complete, a user has a risk of removing an energized power supply connector. This results in erosion of terminals of the power supply connector and the adapter apparatus, reduces service life of a product, and may even cause electric shock.

### SUMMARY

This application is intended to resolve at least one of the foregoing technical problems in the conventional technologies to some extent. Therefore, this application provides an adapter apparatus, to improve reliability and stability of the connection between a power supply connector and the adapter apparatus, and improve safety of V2V charging.

This application further provides a vehicle having the adapter apparatus.

An adapter apparatus according to an embodiment of this application is configured to implement power transmission between vehicles. The adapter apparatus includes an adapter body and a locking component. One end of the adapter body is a vehicle end, configured to connect to a first vehicle, the other end is a socket end, configured to connect to a power supply connector, and the power supply connector is configured to connect to a second vehicle. The locking component is disposed on the adapter body. When the power supply connector is connected to the socket end, the locking component is configured to implement locking between the socket end and the power supply connector.

In the adapter apparatus according to this embodiment of this application, the locking component is provided, so that the adapter apparatus and the power supply connector may be fastened and connected. During charging, the vehicle end is connected to the first vehicle, the socket end is connected to the power supply connector, the first vehicle supplies power to the power supply connector through the adapter apparatus, and the power supply connector transfers power to the second vehicle, thereby allowing the first vehicle to charge the second vehicle. The locking component can improve stability and reliability of the power supply connector when inserted into the adapter apparatus. After charging is complete, the locking component needs to be first adjusted to an unlocked state, and then the power supply connector is removed. However, when the locking component is not unlocked, a user cannot disconnect the power supply connector, thereby avoiding risks of erosion and electric shock. This improves safety of the adapter apparatus.

In some embodiments, the adapter body includes a housing and a terminal component. The terminal component is disposed in the housing, and the terminal component is configured to implement an electrical connection between the vehicle end and the socket end.

In some embodiments, the housing includes a discharging connector housing and a power supply socket housing. The discharging connector housing includes the vehicle end, the power supply socket housing includes the socket end, and the power supply socket housing is connected to the discharging connector housing. A first connection end of the terminal component extends into the discharging connector housing, and a second connection end of the terminal component extends into the power supply socket housing. The locking component is disposed on the discharging connector housing and/or the power supply socket housing.

In some embodiments, the locking component includes a locking hook. The locking hook is mounted on the discharging connector housing or the power supply socket housing. When the power supply connector is connected to the power supply socket housing, the locking hook is configured to lock the power supply connector to the power supply socket housing.

In some embodiments, the locking component further includes a reset mechanism. The reset mechanism is configured to apply a reset force to the locking hook to move the locking hook to a position that locks the power supply connector to the power supply socket housing.

In some embodiments, the power supply socket housing has a power supply connector cavity for connecting to the power supply connector; a groove that communicates with the power supply connector cavity is provided in the power supply socket housing; and the locking hook includes a locking portion. When the locking component locks the power supply connector to the power supply socket housing, the locking portion passes through the groove and extends into the power supply connector cavity; or when the locking component unlocks the power supply socket housing from the power supply connector, the locking portion exits the power supply connector cavity.

In some embodiments, one end of the power supply connector cavity that is away from the discharging connector housing is open to form a power supply connector port, one end of the locking portion that faces the power supply connector port is provided with a chamfered structure, and a tail end of the chamfered structure is inclined toward the discharging connector housing.

In some embodiments, the terminal component includes a power terminal and a signal terminal, and a control circuit is located between the power terminal and the signal terminal. The adapter apparatus further includes a switch component. The switch component is disposed on the discharging connector housing. The switch component is disposed in the control circuit. The switch component has a first operating state and a second operating state. When the switch component is switched from the first operating state to the second operating state, a status of the control circuit changes to trigger the first vehicle to automatically power off.

In some embodiments, the switch component includes a trigger structure; and the locking hook includes a pressure contact portion. When the pressure contact portion switches between a position in which the pressure contact portion abuts against the trigger structure and a position in which the pressure contact portion is separated from the trigger structure, the switch component switches from the first operating state to the second operating state.

In some embodiments, the locking hook includes a locking hook body. The locking hook body is rotatably mounted on the power supply socket housing through a fastening pin shaft. The locking portion and the pressure contact portion are both connected to the locking hook body. The locking portion is separated from the pressure contact portion.

In some embodiments, one of the discharging connector housing and the power supply socket housing has an insertion section, and the other has a sleeve section. The insertion section is sleeved into the sleeve section, and a switch limit structure is disposed on the insertion section. The switch component includes a switch base. The switch base is limited between the switch limit structure and the sleeve section. An opening groove is provided in the sleeve section, and a width of the switch base is less than a width of the opening groove. The trigger structure is disposed on the switch base. The trigger structure is located in the opening groove. The pressure contact portion is adapted to abut against the trigger structure through the opening groove.

In some embodiments, a switch sealing structure is disposed at a cooperating position between the switch base and the insertion section.

In some embodiments, the adapter apparatus further includes a pressing plate. The pressing plate is clamped between the power supply socket housing and the discharging connector housing. A positioning groove is provided in the pressing plate for the terminal component to pass through.

In some embodiments, a first hole is provided in the discharging connector housing for the terminal component to pass through, a first sealing structure is disposed at a cooperating position between the terminal component and the discharging connector housing, a second hole is provided in the power supply socket housing for the terminal component to pass through, and a second sealing structure is disposed at a cooperating position between the terminal component and the power supply socket housing.

In some embodiments, a discharging connector locking groove for locking cooperation with a latch of the first vehicle is provided on an outer peripheral wall of the discharging connector housing.

In some embodiments, one of the discharging connector housing and the power supply socket housing is provided with a hook structure, and the other is provided with a groove structure adapted to be snap-fitted into the hook structure.

In some embodiments, a third sealing structure is disposed at a connection and cooperating position between the discharging connector housing and the power supply socket housing.

In some embodiments, a drainage hole that passes through a housing wall of the power supply socket housing is provided in the power supply socket housing.

A vehicle according to an embodiment of this application includes the adapter apparatus according to an embodiment of this application.

In the vehicle according to this embodiment of this application, the adapter apparatus is disposed, to improve V2V safety, simplify a structure, and reduce costs.

Additional aspects and advantages of this application are partially presented in the following descriptions, partially become clear in the following descriptions, or are learned of through practice of this application.

### BRIEF DESCRIPTION OF DRAWINGS

FIG. 1 is an exploded view of an adapter apparatus according to an embodiment of this application;
FIG. 2 is a diagram of a structure of a switch component on a discharging connector housing according to an embodiment of this application;
FIG. 3 is a diagram of a structure of a locking component on a power supply socket housing according to an embodiment of this application;
FIG. 4 is a cross-sectional view of an adapter apparatus according to an embodiment of this application from one viewing angle;
FIG. 5 is an enlarged cross-sectional view of an adapter apparatus according to an embodiment of this application;
FIG. 6 is a cross-sectional view of an adapter apparatus according to an embodiment of this application from another viewing angle;
FIG. 7 is a diagram of a structure of an adapter apparatus according to an embodiment of this application from one viewing angle;
FIG. 8 is a diagram of a structure of an adapter apparatus according to an embodiment of this application from another viewing angle;
FIG. 9 is a cross-sectional view of an adapter apparatus according to an embodiment of this application from still another viewing angle; and
FIG. 10 is a diagram of a structure of a vehicle according to an embodiment of this application.

### Reference numerals:

2000: vehicle;
1000: power supply connector; 1100: opening;
100: adapter apparatus;
1: discharging connector housing; 10: vehicle socket port; 11: insertion section; 111: hook structure; 112: switch limit structure; 12: discharging connector terminal insulating pillar; 14: discharging connector locking groove;
2: power supply socket housing; 20: power supply connector cavity; 21: groove; 22: bracket; 23: power supply connector port; 24: opening groove; 25: power supply socket housing end face; 26: sleeve section; 27: groove structure; 28: drainage hole; 29: power supply socket terminal insulating pillar;
3: terminal component; 31: first connection end; 32: second connection end; 33: power terminal; 34: signal terminal;
4: locking component; 40: locking hook; 401: locking portion; 4011: chamfered structure; 402: locking hook body; 403: pressure contact portion; 404: guiding inclined surface; 41: fastening pin shaft; 42: reset mechanism; 421: damping device; 422: damping mounting shaft;
5: switch component; 50: trigger structure; 51: switch base;
6: switch sealing structure;
7: pressing plate; 70: positioning groove;
a: first sealing structure; b: second sealing structure; c: third sealing structure;
α: locked state; β: unlocked state.

### DESCRIPTION OF EMBODIMENTS

Embodiments of this application are described in detail below, examples of which are shown in the accompanying drawings, where the same or similar reference numerals represent the same or similar elements or elements having the same or similar functions throughout. Embodiments described below with reference to the accompanying drawings are examples and are used to explain this application, and will not be construed as limiting this application.

In the descriptions of this application, the terms "first" and "second" are merely intended for a purpose of description, and will not be understood as an indication or implication of relative importance or implicit indication of a quantity of indicated technical features. Therefore, a feature limited by "first " or "second" may explicitly indicate or implicitly include one or more such features. In the descriptions of this application, "a plurality of" means at least two, for example, two or three, unless otherwise clearly limited.

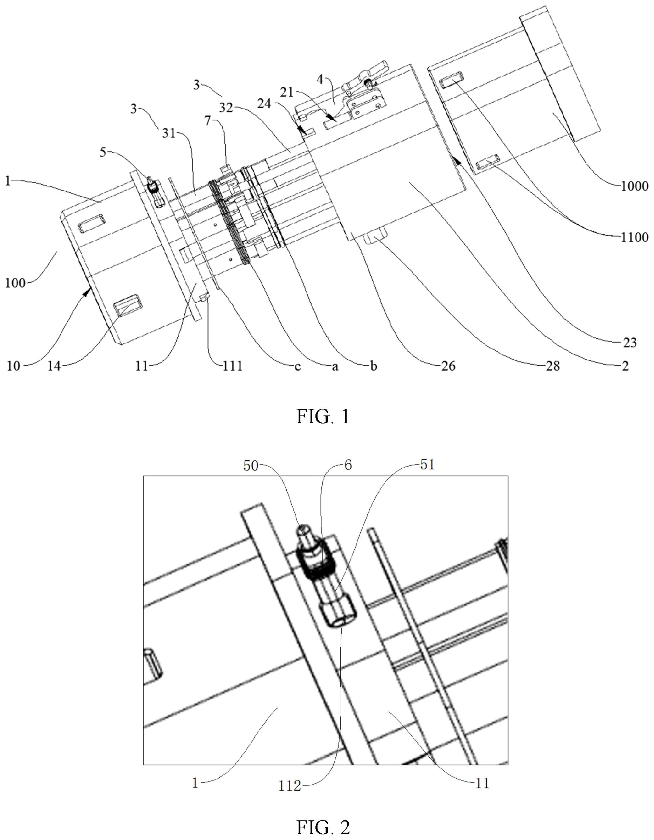

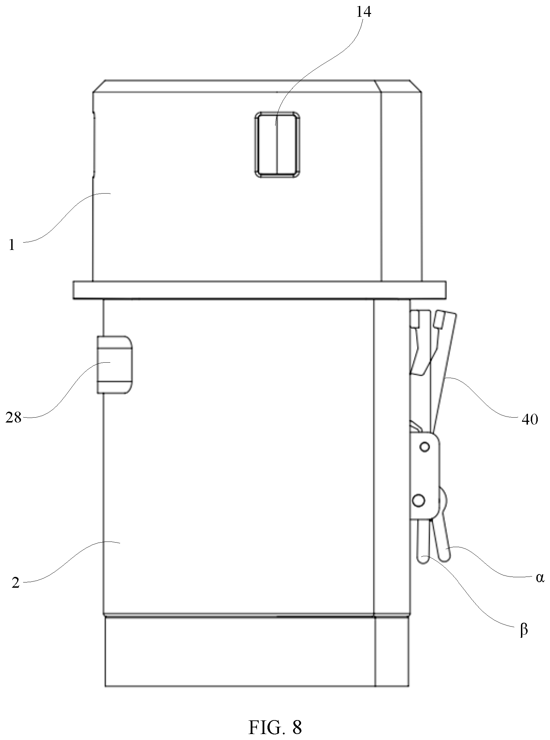

The following describes in detail an adapter apparatus 100 according to an embodiment of this application with reference to FIG. 1 to FIG. 10.

As shown in FIG. 1, the adapter apparatus 100 according to this embodiment of this application may implement power transmission between vehicles, and the adapter apparatus 100 includes an adapter body and a locking component 4.

One end of the adapter body is a vehicle end, and the vehicle end may be connected to a first vehicle. The other end of the adapter body is a socket end, the socket end may be connected to a power supply connector 1000, and the power supply connector 1000 may be connected to a second vehicle. The second vehicle and the first vehicle are connected through the adapter body. The first vehicle is a discharging vehicle and the second vehicle is a powered vehicle. The first vehicle may transfer power to the second vehicle, so that the first vehicle supplies power to the second vehicle.

The locking component 4 is disposed on the adapter body, and the locking component 4 has a locked state α and an unlocked state β. After the adapter apparatus 100 and the power supply connector 1000 are connected, the locking component 4 can lock the power supply connector 1000, to prevent the power supply connector 1000 from disengaging from the power supply socket housing 2 after connection. When the locking component 4 is in the locked state α, the locking component 4 may implement locking between the socket end and the power supply connector 1000, so that the power supply connector 1000 is connected to the socket end, preventing the power supply connector 1000 from falling off from the socket end after connection, and improving stability and reliability of a connection between the adapter body and the power supply connector 1000. When the locking component 4 is in the unlocked state β, the power supply connector 1000 may be separated from the socket end. In this case, the power supply connector 1000 may be removed from the socket end, thereby preventing a user from inadvertently removing the power supply connector 1000 in a charging process.

It will be noted that, in comparison with related technologies, in this application, the locking component 4 is provided. When the locking component 4 is in the locked state α, the power supply connector 1000 is fastened and locked to the adapter body, thereby improving product safety.

In the adapter apparatus 100 according to this embodiment of this application, the locking component 4 is disposed, so that the adapter apparatus 100 and the power supply connector 1000 may be fastened and connected. During charging, the vehicle end is connected to the first vehicle, the socket end is connected to the power supply connector 1000, the first vehicle transmits power to the power supply connector 1000 through the adapter apparatus 100, and the power supply connector 1000 transfers power to the second vehicle, thereby allowing the first vehicle to charge the second vehicle. The locking component 4 can improve stability and reliability of the power supply connector 1000 when inserted into the adapter apparatus 100. After charging is complete, the locking component 4 needs to be first adjusted to an unlocked state β, and then the power supply connector 1000 is removed. However, when the locking component is not unlocked, a user cannot disconnect the power supply connector 1000, thereby avoiding risks of erosion and electric shock. This improves safety of the adapter apparatus 100.

As shown in FIG. 1, in some embodiments, the adapter body includes a housing and a terminal component 3. The terminal component 3 is disposed in the housing, and the terminal component 3 may implement an electrical connection between the vehicle end and the socket end, thereby simplifying an electrical connection structure and reducing costs.

Optionally, in some other embodiments, the adapter body may include a circuit board, and the vehicle end is electrically connected to the socket end through the circuit board.

As shown in FIG. 1, in some embodiments, the housing may include a discharging connector housing 1 and a power supply socket housing 2. The discharging connector housing 1 includes the vehicle end, and the power supply socket housing 2 includes the socket end. For example, one end of the discharging connector housing 1 that is away from the power supply socket housing 2 is the vehicle end, and one end of the power supply socket housing 2 that is away from the discharging connector housing 1 is the socket end. The power supply socket housing 2 is connected to the discharging connector housing 1. The terminal component 3 includes a first connection end 31 and a second connection end 32. The first connection end 31 may extend into the discharging connector housing 1, and the second connection end 32 may extend into the power supply socket housing 2.

During charging, a vehicle socket of the first vehicle extends into the discharging connector housing 1, and the socket is electrically connected to the first connection end 31. The power supply connector 1000 extends into the power supply connector housing 2, and the power supply connector 1000 is electrically connected to the second connection end 32. Therefore, power can be transmitted from the first vehicle to the power supply connector 1000 through the vehicle socket, the first connection end 31, and the second connection end 32, and further transmitted to the second vehicle through the power supply connector 1000.

The locking component 4 is disposed on the discharging connector housing 1 and/or the power supply socket housing 2. Specifically, the locking component 4 may be disposed on the discharging connector housing 1. Alternatively, the locking component 4 may be disposed on the power supply socket housing 2. Alternatively, one part of the locking component 4 is disposed on the discharging connector housing 1, and the other part is disposed on the power supply socket housing 2. Compared to disposing a locking component 4 on each of the discharging connector housing 1 and the power supply socket housing 2, disposing the locking component 4 only on the discharging connector housing 1 or the power supply socket housing 2 can simplify mounting of the locking component 4, improve efficiency, and reduce costs.

Optionally, the locking component 4 is disposed on a bracket, and the bracket is adjacent to the discharging connector housing 1 and the power supply socket housing 2, so that the locking component 4 facilitates locking of the power supply connector 1000.

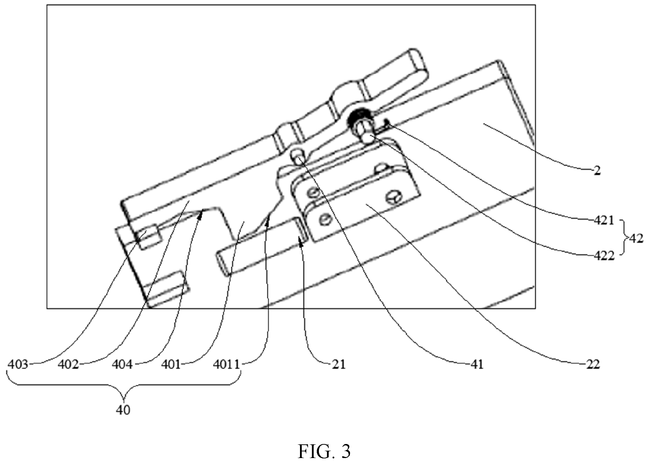

As shown in FIG. 1 and FIG. 3, in some embodiments, the locking component 4 includes a locking hook 40. The locking hook 40 is mounted on the discharging connector housing 1 or the power supply socket housing 2. When the power supply connector 1000 is connected to the power supply socket housing 2, the locking hook 40 can lock the power supply connector 1000 to the power supply socket housing 2. The locking hook 40 is provided, to improve reliability and stability of a connection between the power supply socket housing 2 and the power supply connector 1000.

For example, the locking hook 40 may be mounted on the power supply socket housing 2. When locking, at least a part of the locking hook 40 extends into the power supply socket housing 2 and the power supply connector 1000, to implement the connection between the power supply socket housing 2 and the power supply connector 1000.

As shown in FIG. 3, in some embodiments, the locking component 4 further includes a reset mechanism 42. The reset mechanism 42 may apply a reset force to the locking hook 40. The reset force of the reset mechanism 42 can drive the locking hook 40 to move to a position that locks the power supply connector 1000 to the power supply socket housing 2. When the power supply connector 1000 fully extends into the power supply socket housing 2, under an action of the reset force applied by the reset mechanism 42 on the locking hook 40, the locking hook 40 can retain the position that locks the power supply connector 1000 to the power supply socket housing 2, without intentional locking by the user. This improves reliability and security.

Specifically, the power supply connector 1000 gradually extends into the power supply socket housing 2 while the locking mechanism is in the unlocked state β. Once the power supply connector 1000 is fully inserted into the power supply socket housing 2, the locking hook 40 switches to the locked state α. The reset mechanism 42 may apply the reset force to the locking hook 40. Under the action of the reset force, the locking hook 40 maintains the locked state α. When the power supply connector 1000 needs to be removed from the power supply socket housing 2, the user needs to apply a force to the locking hook 40 to counteract effect of the reset force, and move the locking hook 40 to the unlocked state β.

As shown in FIG. 3, for example, the reset mechanism 42 includes a damping device 421 and a damping mounting shaft 422. The damping device 421 is sleeved on the damping mounting shaft 422. Optionally, the damping device 421 may be a spring damper, a torsion spring, or the like. The damping mounting shaft 422 may be mounted on the power supply socket housing 2.

For example, the locking component 4 includes the locking hook 40 and the reset mechanism 42. The locking hook 40 is mounted on the power supply socket housing 2 through a fastening pin shaft 41, and the locking hook 40 rotates relative to the power supply socket housing 2 with the fastening pin shaft 41 serving as a rotation axis. The reset mechanism 42 may apply the reset force to the locking hook 40, and under the action of the reset force, the locking hook 40 may restore to the locked state α.

Optionally, in some embodiments not shown in the figure, the locking hook 40 may alternatively be mounted on the discharging connector housing 1 through the fastening pin shaft 41.

As shown in FIG. 3, optionally, a bracket 22 is disposed on the power supply socket housing 2, and the locking hook 40 is rotatably mounted on the bracket 22 through the fastening pin shaft 41, to mount the locking hook 40 on the power supply socket housing 2. The damping mounting shaft 422 may alternatively be mounted on the bracket 22. In this way, the bracket 22 is disposed, to support mounting of the fastening pin shaft 41 and the reset mechanism 42, thereby improving convenience of mounting the locking hook 40 and the reset mechanism 42.

As shown in FIG. 3, for example, the fastening pin shaft 41 and the reset mechanism 42 may pass through mounting holes in the bracket 22.

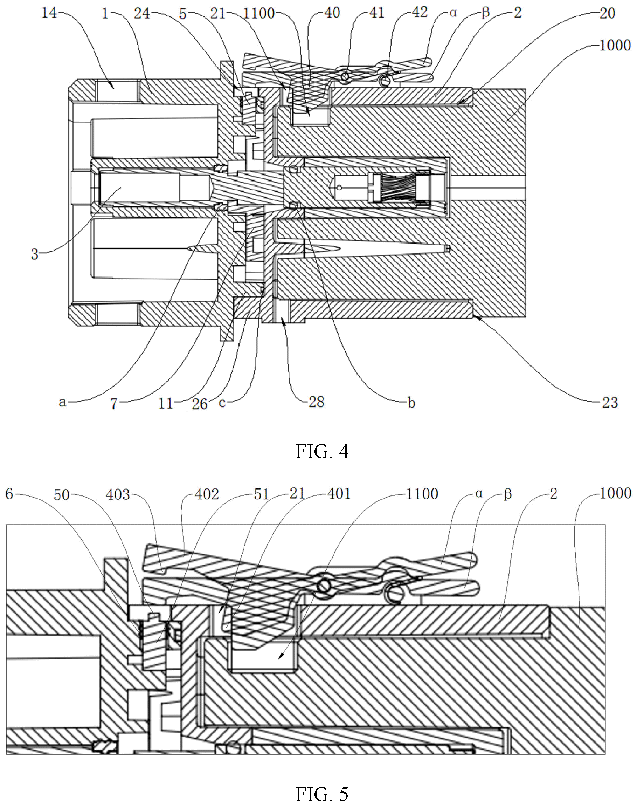

As shown in FIG. 1 and FIG. 4, in some embodiments, the power supply socket housing 2 has a power supply connector cavity 20, the power supply connector cavity 20 may be connected to the power supply connector 1000, a groove 21 is provided in the power supply socket housing 2, and the groove 21 communicates with the power supply connector cavity 20.

Specifically, the vehicle end of the discharging connector housing 1 is provided with a vehicle socket port 10, and the discharging connector housing 1 may be inserted into the vehicle socket through the vehicle socket port 10. The socket end of the power supply socket housing 2 has a power supply connector cavity 20, and the power supply connector cavity 20 of the power supply socket housing 2 can accommodate the power supply connector 1000.

When V2V is performed through the adapter apparatus 100, the vehicle socket port 10 of the adapter apparatus 100 is inserted into the vehicle socket of the first vehicle, and the power supply connector 1000 connected to the second vehicle is inserted into the power supply connector cavity 20 of the power supply socket housing 2, so that the first vehicle supplies power to the second vehicle.

It will be noted that the power supply connector cavity 20 herein may accommodate and connect to the power supply connector 1000; alternatively, the power supply connector cavity 20 may accommodate and connect to another adapter; the power supply connector 1000 may further supply power to a load, to implement V2L (Vehicle to Load, an energy exchange technology between a vehicle and a load), so that the vehicle supplies power to another load.

As shown in FIG. 3 and FIG. 4, the locking hook 40 includes a locking portion 401, when the locking component 4 is in the locked state α, the locking portion 401 locks the power supply connector 1000 to the power supply socket housing 2; the locking portion 401 may pass through the groove 21 and extend into the power supply connector cavity 20; when the locking component 4 unlocks the power supply connector 1000 from the power supply socket housing 2, the locking portion 401 exits the power supply connector cavity 20. Therefore, the groove 21 in the power supply socket housing 2 cooperates with the locking component 4 and limits movement of the locking component 4. After the power supply connector 1000 is inserted into the power supply connector cavity 20, a part of the locking component 4 that extends into the power supply connector cavity 20 can lock the power supply connector 1000, to prevent the power supply connector 1000 from disengaging.

Specifically, when the power supply connector 1000 is inserted into the power supply connector cavity 20, an opening 1100 that can accommodate the locking portion 401 or an opening 1100 that allows the locking portion 401 to pass through is provided in a part corresponding to the locking portion 401 of the power supply connector 1000. A size and a position of the opening 1100 are clearly defined in the IEC62196 standard, so that a power supply connector in a market can cooperate with the adapter apparatus 100 described in this application.

When the locking component 4 is in the locked state α, the power supply connector 1000 is placed in the power supply connector cavity 20. The locking portion 401 may pass through the groove 21 and extend into the power supply connector cavity 20. The locking portion 401 may extend into the opening 1100 in the power supply connector 1000, and the reset mechanism 42 continuously applies a reset force to the locking portion 401, to keep the locking portion 401 in a position that extends into the opening 1100, so that the locking component 4 locks the power supply connector 1000.

To exit the power supply connector 1000 from the power supply connector cavity 20, the locking component 4 needs to be adjusted to the unlocked state β, the user applies a force to the reset mechanism 42, to enable the locking portion 401 to rotate relative to the fastening pin shaft 41, and the locking portion 401 exits the opening 1100 of the power supply connector 1000. Alternatively, the locking portion 401 exits the opening 1100 of the power supply connector 1000 and the groove 21. In this case, the locking component 4 unlocks the power supply connector 1000, and the power supply connector 1000 may exit the power supply connector cavity 20. Then, the user stops applying a force to the reset mechanism 42, the locking portion 401 is reset under the action of the reset mechanism 42, that is, the locking portion 401 passes through the groove 21 and extends into the power supply connector cavity 20.

For example, the locking portion 401, the fastening pin shaft 41, and the reset mechanism 42 are sequentially spaced apart. The user presses one end (namely, a right end in FIG. 3) of the locking hook 40 that is away from the discharging connector housing 1, so that the locking portion 401 rotates clockwise around the fastening pin shaft 41, thereby moving the locking portion 401 toward the unlocked state β. When a pressing force applied to the locking hook 40 is released, the locking portion 401 rotates counterclockwise around the fastening pin shaft 41 under the action of the reset force of the reset mechanism 42, thereby moving the locking portion 401 toward the locked state α.

As shown in FIG. 1, FIG. 3, and FIG. 4, in some embodiments, one end of the power supply connector cavity 20 that is away from the discharging connector housing 1 is open, and the open end of the power supply connector cavity 20 is a power supply connector port 23. The locking portion 401 is provided with a chamfered structure 4011, and the chamfered structure 4011 is disposed at one end that faces the power supply connector port 23. A tail end (namely, a lower end in FIG. 3) of the chamfered structure 4011 is inclined toward the discharging connector housing 1. In FIG. 3, the lower end of the chamfered structure 4011 extends to the left, and an upper end of the chamfered structure 4011 extends to the right. The chamfered structure 4011 is disposed, so that when the power supply connector 1000 is inserted, resistance between the power supply connector 1000 and the locking portion 401 during cooperation can be reduced, effort required for insertion is reduced, and there is no need to press the reset mechanism 42, thereby improving connection convenience.

Specifically, a side of the locking portion 401 that faces the power supply connector port 23 is provided with the chamfered structure 4011, and the tail end of the chamfered structure 4011 is inclined and forms a chamfered surface. When the power supply connector 1000 passes through the power supply connector port 23, and the power supply connector 1000 is gradually inserted into the power supply connector cavity 20, a front end face of the power supply connector 1000 abuts against the chamfered surface of the locking portion 401 and slides along the chamfered surface deeper into the power supply connector cavity 20. At this moment, the locking portion 401 rotates around the fastening pin shaft 41. When the opening 1100 of the power supply connector 1000 corresponds to the locking portion 401, the locking portion 401 is reset under the reset force of the reset mechanism 42, that is, the locking portion 401 simultaneously passes through the opening 1100 of the power supply connector 1000 and the groove 21 of the power supply socket housing 2.

For example, a side of the locking portion 401 that is away from the chamfered structure 4011 is provided with a locking hook shoulder, and when the user removes the power supply connector 1000 without pressing the locking hook 40, the locking hook shoulder may abut against an opening wall of the power supply connector 1000, preventing the power supply connector 1000 from disengaging from the power supply connector cavity 20.

In addition, the chamfered structure 4011 is disposed, so that when the locking portion 401 is inserted into the groove 21 of the power supply socket housing 2 and the opening 1100 of the power supply connector 1000, difficulty of insertion is reduced.

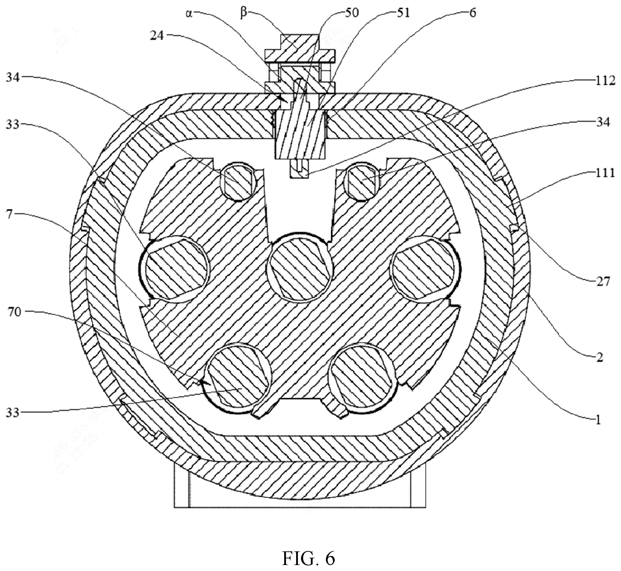

As shown in FIG. 1 and FIG. 6, in some embodiments, the terminal component 3 includes a power terminal 33 and a signal terminal 34, and a control circuit is located between the power terminal 33 and the signal terminal 34. The adapter apparatus 100 further includes a switch component 5. The switch component 5 is disposed on the discharging connector housing 1. The switch component 5 is disposed in the control circuit. The switch component 5 has a first operating state and a second operating state. When the switch component 5 is switched from the first operating state to the second operating state, a status of the control circuit changes to trigger the first vehicle to automatically power off. In this case, the switch component 5 changes the status of the control circuit. When the power supply connector 1000 needs to be normally removed, or the locking component 4 is incorrectly operated to unlock, leading to disengagement of the power supply connector 1000, or the power supply connector 1000 is forcibly removed, the first vehicle stops supplying power, and the vehicle socket port 10 is powered off, avoiding erosion of the power supply connector 1000 and the adapter apparatus 100. This reduces service lives of the power supply connector 1000 and the adapter apparatus 100, and avoids a risk of electric shock caused by an inappropriate operation.

A change in the operating status of the switch component 5 may change a status of the terminal component 3, for example, change a CC (Connection Confirmation Function) or CP (Control Pilot Function) status of a signal terminal 34, to change the status of the control circuit. The first vehicle may identify a change in the status of the control circuit by using a change in a CC or CP electrical signal of the signal terminal 34, and automatically powers off. This can further prevent the power supply connector 1000 from being disconnected from the adapter apparatus 100 while energized, improve use safety of the adapter apparatus 100, avoid arc erosion caused by energized disconnection between the adapter apparatus 100 and the power supply connector 1000, and extend service lives of the adapter apparatus 100 and the power supply connector 1000. Therefore, even when the power supply connector 1000 is disconnected while energized due to a violent or incorrect user operation, the locking component 4 may be in the unlocked state β at a specific moment. In this case, the operating status of the switch component 5 is changed, to change the status of the control circuit in the terminal component 3, thereby cutting off power supply. This further improves the use safety of the adapter apparatus 100 and the power supply connector 1000.

Optionally, the change in the status of the control circuit may be a resistance change or a voltage change of the control circuit.

For example, the switch component 5 may integrate a switch and a resistor. A mature mass-produced product on the market may be purchased. Two cables are led out from the switch and are connected in series or in parallel in the control circuit of the terminal component 3.

As shown in FIG. 1, FIG. 2, and FIG. 6, in some embodiments, the switch component 5 includes a trigger structure 50, and the locking hook 40 includes a pressure contact portion 403. The pressure contact portion 403 may abut against the trigger structure 50, and the pressure contact portion 403 may alternatively be separated from the trigger structure 50. When the pressure contact portion 403 switches between a position in which the pressure contact portion 403 abuts against the trigger structure 50 and a position in which the pressure contact portion 403 is separated from the trigger structure 50, the switch component 5 switches from the first operating state to the second operating state.

For example, when the pressure contact portion 403 abuts against the trigger structure 50, the switch component 5 is in the first operating state. When the pressure contact portion 403 is separated from the trigger structure 50, the switch component 5 switches to the second operating state. Therefore, when the operating status of the switch component 5 is changed, the status of the control circuit is changed, and the first vehicle powers off. The operating status of the switch component 5 may be changed through the pressure contact portion 403 of the locking hook 40, thereby implementing linkage between the locking component 4 and the switch component 5. Before and after the locking component 4 is operated to unlock to remove the power supply connector 1000, the operating status of the switch component 5 is changed, to change the status of the terminal component 3, thereby changing the status of the control circuit. The first vehicle may identify a change in the status of the control circuit by using a change in the CC or CP electrical signal of the signal terminal 34, and automatically powers off. This can further prevent the power supply connector 1000 from being disconnected from the adapter apparatus 100 while energized, improve the use safety of the adapter apparatus 100, avoid arc erosion caused by energized disconnection between the adapter apparatus 100 and the power supply connector 1000, and extend the service lives of the adapter apparatus 100 and the power supply connector 1000. Therefore, even when the power supply connector 1000 is disconnected while energized due to a violent or incorrect user operation, the locking component 4 may be in the unlocked state β at a specific moment. In this case, the status of the switch component 5 is changed, to change the status of the control circuit in the terminal component 3, thereby cutting off power supply. This further improves the use safety of the adapter apparatus 100 and the power supply connector 1000.

Specifically, when the locking component 4 is in the locked state α, the pressure contact portion 403 may abut against the trigger structure 50 of the switch component 5. Under the action of the reset force of the reset mechanism 42, the switch component 5 is in the first operating state. The power supply connector 1000 may be electrically connected to the vehicle socket through the terminal component 3 The first vehicle can supply power to the second vehicle. When the locking component 4 changes from the locked state α to the unlocked state β, the trigger structure 50 may change a trigger stroke, the status of the control circuit in which the switch component 5 is located changes, for example, resistance and an on/off state of a CC or CP loop of the signal terminal changes. A vehicle may identify the change in the status of the control circuit by using a change in a CC or CP electrical signal. When the locking component 4 is in the unlocked state β, the pressure contact portion 403 is separated from the trigger structure 50, the switch component 5 is in the second operating state, and the first vehicle automatically powers off. In this case, even if the power supply connector 1000 is fully inserted, there is no electrical connection between the power supply connector 1000 and the vehicle socket. In this case, the power supply connector 1000 is not removed when energized.

When the user removes the power supply connector 1000, the locking hook 40 needs to be pressed to release the locked state α of the locking component 4, so that the first vehicle may identify the change in the CC or CP electrical signal and immediately stop power supply. When the user removes the power supply connector 1000 again, a disconnection phenomenon under a load does not occur. This improves service life of the product and use safety of the user. When the user inserts the power supply connector 1000, the chamfered structure 4011 of the locking portion 401 allows the user to directly insert the power supply connector 1000 without pressing the locking hook 40, and the locking component 4 enters the locked state α under the action of the reset force.

In the adapter apparatus 100 according to this embodiment of this application, the locking component 4 and the switch component 5 are disposed, so that an on/off state of an electrical connection between the adapter apparatus 100 and the power supply connector 1000, and mechanical connection and separation can be controlled. According to this application, insertion stability and fastening reliability between the power supply connector 1000 and the power supply socket housing 2 can be improved by using the locking component 4. When the power supply connector 1000 is removed, the locking component 4 needs to be manually adjusted to the unlocked state β. This improves use safety of the adapter apparatus 100, and reduces a probability that the user inadvertently removes the power supply connector 1000. In addition, through cooperation between the trigger structure 50 and the locking component 4, the locking component 4 and the switch component 5 are linked. After power supply is complete, the locking component 4 is manually unlocked to remove the power supply connector 1000, and the adapter apparatus 100 may trigger the first vehicle to automatically power off. In this case, the power supply connector 1000 is not removed when energized. This improves safety of the adapter apparatus 100. The adapter apparatus 100 in this application is different from the related technologies as follows: The adapter apparatus 100 may be configured for V2V charging, and is compatible with various power supply connectors, including a national standard power supply connector, an American standard power supply connector, and a European standard power supply connector.

As shown in FIG. 3, in some embodiments, the locking hook 4 includes a locking hook body 402. The locking hook body 402 is mounted on the power supply socket housing 2 through the fastening pin shaft 41. The locking hook body 402 may rotate relative to the power supply socket housing 2. The locking portion 401 is connected to the locking hook body 402, the pressure contact portion 403 is connected to the locking hook body 402, and the locking portion 401 is separated from the pressure contact portion 403. The locking portion 401 and the pressure contact portion 403 are both connected to the locking hook body 402, implementing linkage between the locking hook body 402, the pressure contact portion 403, and the locking portion 401. That is, when the locking hook body 402 moves, the locking portion 401 and the pressure contact portion 403 both move. Compared with a mechanical connecting rod structure, this structure is simple, ingenious, and highly reliable.

As shown in FIG. 3, FIG. 5, and FIG. 7, specifically, the pressure contact portion 403, the locking portion 401, the fastening pin shaft 41, and the reset mechanism 42 are sequentially spaced apart. The fastening pin shaft 41 and the damping mounting shaft 422 are disposed on the bracket 22. The locking hook body 402 may rotate with the fastening pin shaft 41 serving as a pivot point. The locking component 4 is disposed on the power supply socket housing 2. When the locking component 4 is in a locked state α, a right end of the locking hook body 402 is away from the power supply socket housing 2, and a left end of the locking hook body 402 is close to the power supply socket housing 2. When the locking component 4 is in the unlocked state β, the right end of the locking hook body 402 is close to the power supply socket housing 2, and the left end of the locking hook body 402 is away from the power supply socket housing 2.

Optionally, as shown in FIG. 3, the locking portion 401 is connected to the locking hook body 402 through a guiding inclined surface 404. The guiding inclined surface 404 reduces stress concentration and increases strength of the connection between the locking portion 401 and the locking hook body 402.

As shown in FIG. 1 and FIG. 4, in some embodiments, the discharging connector housing 1 has an insertion section 11, the power supply socket housing 2 has a sleeve section 26, and the insertion section 11 may be sleeved into the sleeve section 26. In this case, the discharging connector housing 1 may be connected to the power supply socket housing 2. The insertion section 11 and the sleeve section 26 are disposed, implementing positioning and fastening for mounting of the discharging connector housing 1, thereby improving reliability of connection between the discharging connector housing 1 and the power supply socket housing 2 and facilitating assembly.

Optionally, in some embodiments not shown in the figure, the discharging connector housing 1 may have a sleeve section 26, and the power supply socket housing 2 may have an insertion section 11.

As shown in FIG. 1 and FIG. 2, a switch limit structure 112 is disposed on the insertion section 11. The switch limit structure 112 may limit movement of the switch component 5, and the switch limit structure 112 may maintain a designed position of the switch component 5. With reference to FIG. 4 to FIG. 6, the switch component 5 includes a switch base 51, the switch base 51 is limited between the switch limit structure 112 and the sleeve section 26, an opening groove 24 is disposed in the sleeve section 26, and a width of the switch base 51 is less than a width of the opening groove 24. In this case, the opening groove 24 can limit movement of the switch base 51 and prevent the switch base 51 from disengaging radially outward through the opening groove 24. The trigger structure 50 is disposed on the switch base 51, the trigger structure 50 is located in the opening groove 24, and the locking hook 40 may pass through the opening groove 24 and abut against the trigger structure 50. The trigger structure 50 is disposed on the switch base 51 and the trigger structure 50 is located in the opening groove 24. Because the switch base 51 is limited between the switch limit structure 112 and the sleeve section 26, when the locking hook 40 abuts against the trigger structure 50, movement of the switch component 5 is limited, but the trigger structure 50 may move relative to the switch component 5. In this case, the status of the control circuit may be changed by changing a position of the trigger structure 50. The opening groove 24 and the switch limit structure 112 are provided, so that a relative position of the switch component 5 is ensured. When the locking hook 40 abuts against the switch component 5, this avoids product performance degradation caused by looseness of the switch component 5. Therefore, this structure is simple, ingenious, and highly reliable, production costs can be reduced and product quality can be improved.

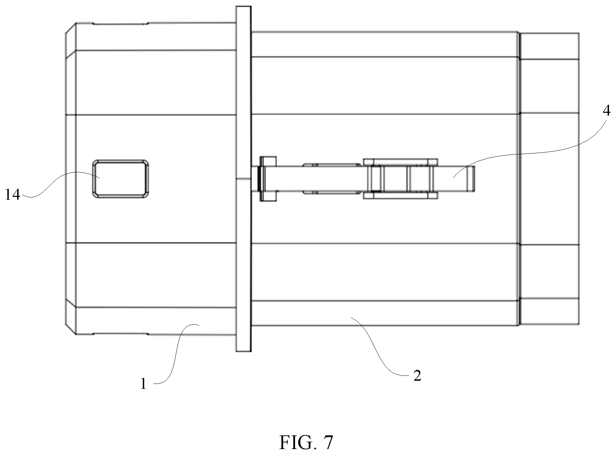

As shown in FIG. 7, for example, the width of the opening groove 24 may be less than a size of a partial structure of the locking hook 40. Therefore, the opening groove 24 may be used as a stop structure of the locking hook 40, thereby reducing a probability that the trigger structure 50 is damaged due to overpressure on the trigger structure 50.

As shown in FIG. 6, in some embodiments, a switch sealing structure 6 is disposed at a cooperating position between the switch base 51 and the insertion section 11. This can prevent water from entering the adapter apparatus 100 from the cooperating position between the switch base 51 and the insertion section 11, and improve waterproof performance of the adapter apparatus 100, thereby improving safety of the adapter apparatus 100.

Optionally, the switch sealing structure 6 may be a sealing ring structure.

Optionally, the switch sealing structure 6 may be a potting structure.

Optionally, the switch sealing structure 6 may be a flat gasket structure.

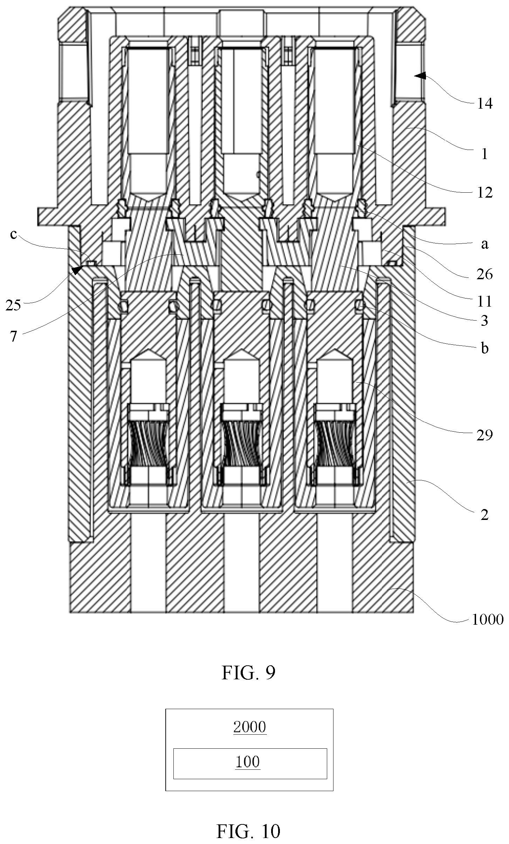

In some embodiments, as shown in FIG. 1, FIG. 4, and FIG. 6, the adapter apparatus 100 further includes a pressing plate 7. The pressing plate 7 is clamped between the power supply socket housing 2 and the discharging connector housing 1. A positioning groove 70 is provided in the pressing plate 7, and the terminal component 3 may pass through the positioning groove 70. The positioning groove 70 in the pressing plate 7 may engage the terminal component 3, so that the pressing plate 7 may position the terminal component 3. This improves convenience and accuracy of mounting of the terminal component 3, and improves mounting efficiency. Referring to FIG. 9, the pressing plate 7 and the terminal component 3 are placed in the discharging connector housing 1 after cooperation, and then the power supply socket housing 2 is assembled. A power supply socket housing end face 25 may press against the pressing plate 7. When the power supply connector 1000 is inserted into the power supply connector cavity 20 and when the discharging connector housing 1 is inserted into the vehicle socket, this prevents the terminal component 3 from moving in an axial direction of the terminal component 3. This reduces wear on the terminal component 3 and improves the service life of the product.

Optionally, referring to FIG. 9, the discharging connector housing 1 is provided with a discharging connector terminal insulating pillar 12, the power supply socket housing 2 is provided with a power supply socket terminal insulating pillar 29, and the terminal component 3 may implement self-positioning through a terminal insulating pillar. The discharging connector terminal insulating pillar 12 and the power supply socket terminal insulating pillar 29 are disposed, preventing current leakage of the adapter apparatus 100, and improving safety of the adapter apparatus 100.

For example, the positioning groove 70 may be a complete circular groove. The complete circular groove has a simple structure that facilitates molding.

For example, the positioning groove 70 may be a C-shaped notch groove, and the C-shaped groove includes an opening 1100. The terminal component 3 may be snap-fitted into the C-shaped notch groove. The C-shaped notch groove is easy to mount, thereby improving assembly efficiency.

As shown in FIG. 4 and FIG. 9, in some embodiments, a first hole is provided in the discharging connector housing 1, the first hole allows the terminal component 3 to pass through, a first sealing structure a may be disposed at a cooperating position between the terminal component 3 and the discharging connector housing 1, a second hole is provided in the power supply socket housing 2, and the second hole allows the terminal component 3 to pass through, and a second sealing structure b is disposed at a cooperating position between the terminal component 3 and the power supply socket housing 2. The first sealing structure a and the second sealing structure b are disposed, to prevent water from passing through the first hole and the second hole, and prevent water from entering between the discharging connector housing 1 and the power supply socket housing 2, thereby avoiding a short circuit and improving product safety and quality.

Specifically, the terminal component 3 includes a power terminal 33 and a signal terminal 34. The power terminal 33 includes L1, L2, L3, N, and PE. L1, L2, and L3 are live wires. N is a neutral wire. PE is a ground wire. The signal terminal 34 includes CC and CP. There are seven first holes and seven second holes. The first sealing structure a is disposed on the power terminal 33 of the discharging connector housing 1, and the second sealing structure b is disposed on the power terminal 33 of the power supply socket housing 2.

For example, the first sealing structure a may be a sealing ring structure, such as an M-shaped sealing ring; potting sealing may be used; or flat gasket sealing may be used.

For example, the second sealing structure b may be a sealing ring structure, such as an O-shaped sealing ring; potting sealing may be used; or flat gasket sealing may be used.

As shown in FIG. 1, FIG. 4, FIG. 8, and FIG. 9, in some embodiments, a discharging connector locking groove 14 is provided on an outer peripheral wall of the discharging connector housing 1, and the discharging connector locking groove 14 may be used for locking cooperation with a latch of the vehicle socket of the first vehicle. The discharging connector locking groove 14 is provided and used for locking engagement with a latch of a vehicle socket, reducing a probability of disengagement, thereby improving stability and reliability of connection and cooperation between the adapter apparatus 100 and the vehicle socket.

For example, the latch of the vehicle socket is a conventional technology, and the latch may be an electronic lock or a mechanical lock.

As shown in FIG. 6, in some embodiments, the discharging connector housing 1 may be provided with a hook structure 111, the power supply socket housing 2 may be provided with a groove structure 27, and the hook structure 111 may be snap-fitted into the groove structure 27. Alternatively, the power supply socket housing 2 may be provided with a hook structure 111, the discharging connector housing 1 may be provided with a groove structure 27, and the hook interface may be snap-fitted into the groove structure 27. The hook structure 111 and the groove structure 27 are disposed, so that positioning may be implemented during insertion into the discharging connector housing 1 and the power supply socket housing 2, thereby improving assembly efficiency of the adapter apparatus 100. In addition, the hook structure 111 and the groove structure 27 are simple and highly reliable.

As shown in FIG. 4 and FIG. 9, in some embodiments, the discharging connector housing 1 and the power supply socket housing 2 are connected to each other and cooperate, and a third sealing structure c is disposed at a connection and cooperating position. The third sealing structure c is disposed, to prevent water from entering between the discharging connector housing 1 and the power supply socket housing 2 from a connection position between the discharging connector housing 1 and the power supply socket housing 2.

Specifically, the third sealing structure c may be a sealing ring structure, a groove is provided in a cooperating end face of the discharging connector housing 1, a groove is disposed on a cooperating end face of the power supply socket housing 2, and a sealing ring may be disposed on the groove. In a process of connecting and fastening the power supply socket housing 2 and the discharging connector housing 1, the sealing ring is compressed to form a seal.

Alternatively, potting sealing or flat gasket sealing may be used for the third sealing structure c.

As shown in FIG. 1, FIG. 4, and FIG. 8, in some embodiments, a drainage hole 28 is provided in the power supply socket housing 2, and the drainage hole 28 passes through a housing wall of the power supply socket housing 2. A groove 21 is provided in the power supply socket housing 2.
During charging or discharging, rainwater may enter a gap between the power supply connector 1000 and the power supply socket housing 2 through the groove 21. In this case, the rainwater flows toward a lowest point, and the rainwater may enter and pass through the drainage hole 28, thereby implementing rainwater drainage and preventing fluid accumulation.

As shown in FIG. 10, a vehicle 2000 according to an embodiment of this application includes the adapter apparatus 100 according to an embodiment of this application.

In the vehicle 2000 according to this embodiment of this application, the adapter apparatus 100 is disposed, to improve V2V safety, simplify a structure, and reduce costs.

In the description of this application, it will be understood that orientation or location relationships indicated by terms "longitudinal", "transverse", "length", "width", "thickness", "upper", "lower", "front", "back", "left", "right", "vertical", "horizontal", "top", "bottom", "inner", "outer", and the like are orientation or location relationships based on the accompanying drawings, and are merely intended for ease of describing this application and simplifying description, rather than indicating or implying that an apparatus or element in question needs to have a specific orientation or needs to be constructed and operated in a specific orientation. Therefore, such terms cannot be construed as a limitation on this application.

In this application, unless expressly stipulated and defined otherwise, the terms "mount", " join", "connect", "fasten", and the like will be understood in a broad sense. For example, "connection" may be fastening, a detachable connection, or an integral connection; may be a mechanical connection, or may be an electrical connection or intercommunication; or may be a direct connection, an indirect connection through an intermediate medium, or a connection between two elements or an interaction between two elements. For a person of ordinary skill in the art, a specific meaning of the foregoing terms in this application will be understood based on a specific situation.

In the descriptions of this specification, the description with reference to the terms such as "an embodiment", "some embodiments", "an example", "a specific example", or "some examples" means that a specific feature, a structure, a material, or a characteristic described with reference to the embodiment or example is included in at least one embodiment or example of this application. In this specification, the example expressions of the foregoing terms need not be directed to the same embodiment or example. In addition, the described specific features, structures, materials, or characteristics may be combined in an appropriate manner in any one or more of embodiments or examples. In addition, a person skilled in the art may combine and associate different embodiments or examples described in this specification.

Although embodiments of this application have been shown and described above, it will be understood that the foregoing embodiments are examples and are not to be construed as limitations on this application. A person of ordinary skill in the art may change, modify, replace and vary the foregoing embodiments within the scope of this application.

## Claims

1. An adapter apparatus (100), configured to implement power transmission between vehicles, wherein the adapter apparatus (100) comprises:
an adapter body, one end of the adapter body being a vehicle end, configured to connect to a first vehicle, the other end being a socket end, configured to connect to a power supply connector (1000), and the power supply connector (1000) being configured to connect to a second vehicle; and
a locking component (4), the locking component (4) being disposed on the adapter body, and when the power supply connector (1000) being connected to the socket end, the locking component (4) being configured to implement locking between the socket end and the power supply connector (1000).

2. The adapter apparatus (100) according to claim 1, wherein the adapter body comprises a housing and a terminal component (3), the terminal component (3) is disposed in the housing, and the terminal component (3) is configured to implement an electrical connection between the vehicle end and the socket end.

3. The adapter apparatus (100) according to claim 2, wherein the housing comprises:
a discharging connector housing (1), the discharging connector housing (1) comprising the vehicle end; and
a power supply socket housing (2), the power supply socket housing (2) comprising the socket end, and the power supply socket housing (2) is connected to the discharging connector housing (1);
a first connection end (31) of the terminal component (3) extends into the discharging connector housing (1), and a second connection end (32) of the terminal component (3) extends into the power supply socket housing (2); and
the locking component (4) is disposed on the discharging connector housing (1) and/or the power supply socket housing (2).

4. The adapter apparatus (100) according to claim 3, wherein the locking component (4) comprises a locking hook (40); the locking hook (40) is mounted on the discharging connector housing (1) or the power supply socket housing (2); and when the power supply connector (1000) is connected to the power supply socket housing (2), the locking hook (40) is configured to lock the power supply socket housing (2) to the power supply connector (1000).

5. The adapter apparatus (100) according to claim 4, wherein the locking component (4) further comprises a reset mechanism (42), and the reset mechanism (42) is configured to apply a reset force to the locking hook (40) to move the locking hook (40) to a position that locks the power supply connector (1000) to the power supply socket housing (2).

6. The adapter apparatus (100) according to claim 4 or 5, wherein the power supply socket housing (2) has a power supply connector cavity (20) for connecting to the power supply connector (1000); a groove (21) that communicates with the power supply connector cavity (20) is provided in the power supply socket housing (2); the locking hook (40) comprises a locking portion (401); and when the locking component (4) locks the power supply connector (1000) to the power supply socket housing (2), the locking portion (401) passes through the groove (21) and extends into the power supply connector cavity (20); or when the locking component (4) unlocks the power supply socket housing (2) from the power supply connector (1000), the locking portion (401) exits the power supply connector cavity (20).

7. The adapter apparatus (100) according to claim 6, wherein one end of the power supply connector cavity (20) that is away from the discharging connector housing (1) is open to form a power supply connector port (23), one end of the locking portion (401) that faces the power supply connector port (23) is provided with a chamfered structure (4011), and a tail end of the chamfered structure (4011) is inclined toward the discharging connector housing (1).

8. The adapter apparatus (100) according to claim 6 or 7, wherein the terminal component (3) comprises a power terminal (33) and a signal terminal (34), and a control circuit is located between the power terminal (33) and the signal terminal (34); and
the adapter apparatus (100) further comprises a switch component (5); the switch component (5) is disposed on the discharging connector housing (1); the switch component (5) is disposed in the control circuit; the switch component (5) has a first operating state and a second operating state; and when the switch component (5) is switched from the first operating state to the second operating state, a status of the control circuit changes to trigger the first vehicle to automatically power off.

9. The adapter apparatus (100) according to claim 8, wherein the switch component (5) comprises a trigger structure (50); the locking hook (40) comprises a pressure contact portion (403); and when the pressure contact portion (403) switches between a position in which the pressure contact portion (403) abuts against the trigger structure (50) and a position in which the pressure contact portion (403) is separated from the trigger structure (50), the switch component (5) switches from the first operating state to the second operating state.

10. The adapter apparatus (100) according to claim 9, wherein the locking hook (40) comprises a locking hook body (402), the locking hook body (402) is rotatably mounted on the power supply socket housing (2) through a fastening pin shaft (41), the locking portion (401) and the pressure contact portion (403) are both connected to the locking hook body (402), and the locking portion (401) is separated from the pressure contact portion (403).

11. The adapter apparatus (100) according to claim 9 or 10, wherein one of the discharging connector housing (1) and the power supply socket housing (2) has an insertion section (11), the other has a sleeve section (26), the insertion section (11) is sleeved into the sleeve section (26), a switch limit structure (112) is disposed on the insertion section (11), the switch component (5) comprises a switch base (51), the switch base (51) is limited between the switch limit structure (112) and the sleeve section (26), an opening groove (24) is provided in the sleeve section (26), a width of the switch base (51) is less than a width of the opening groove (24), the trigger structure (50) is disposed on the switch base (51), the trigger structure (50) is located in the opening groove (24), and the pressure contact portion (403) is adapted to abut against the trigger structure (50) through the opening groove (24).

12. The adapter apparatus (100) according to claim 11, wherein a switch sealing structure (6) is disposed at a cooperating position between the switch base (51) and the insertion section (11).

13. The adapter apparatus (100) according to any one of claims 3 to 12, wherein the adapter apparatus (100) further comprises a pressing plate (7), the pressing plate (7) is clamped between the power supply socket housing (2) and the discharging connector housing (1), and a positioning groove (70) is provided in the pressing plate (7) for the terminal component (3) to pass through.

14. The adapter apparatus (100) according to any one of claims 3 to 13, wherein a first hole is provided in the discharging connector housing (1) for the terminal component (3) to pass through, a first sealing structure (a) is disposed at a cooperating position between the terminal component (3) and the discharging connector housing (1), a second hole is provided in the power supply socket housing (2) for the terminal component (3) to pass through, and a second sealing structure (b) is disposed at a cooperating position between the terminal component (3) and the power supply socket housing (2).

15. The adapter apparatus (100) according to any one of claims 3 to 14, wherein a discharging connector locking groove (14) for locking cooperation with a latch of the first vehicle is provided on an outer peripheral wall of the discharging connector housing (1).

16. The adapter apparatus (100) according to claim 3, wherein one of the discharging connector housing (1) and the power supply socket housing (2) is provided with a hook structure (111), and the other is provided with a groove structure (27) adapted to be snap-fitted into the hook structure (111).

17. The adapter apparatus (100) according to any one of claims 3 to 16, wherein a third sealing structure (c) is disposed at a connection and cooperating position between the discharging connector housing (1) and the power supply socket housing (2).

18. The adapter apparatus (100) according to any one of claims 3 to 17, wherein a drainage hole (28) that passes through a housing wall of the power supply socket housing (2) is provided in the power supply socket housing (2).

19. A vehicle (2000), wherein the vehicle comprises the adapter apparatus (100) according to any one of claims 1 to 18.
